# EUROPÄISCHE PATENTANMELDUNG

(11) **EP 1 862 682 A2**
(43) Veröffentlichungstag der Anmeldung: **05.12.2007**
(21) Anmeldenummer: 07101368.4
(22) Anmeldetag: 30.01.2007
(51) Int. Cl.: F16C 13/04

(54) **Walzenlagerung**

(30) Priorität: 31.05.2006 DE 102006025299
(71) Anmelder: Voith Patent GmbH, 89522 Heidenheim (DE)
(72) Erfinder: Hißen, Axel, 47803, Krefeld (DE); Hoppermann, Andreas, 41751, Viersen (DE)
(74) Vertreter: Kunze, Klaus

(57) **Zusammenfassung**

Die Erfindung betrifft eine Walzenlagerung zwischen einem rotierenden und einem zweiten Lagerelement (3,5), welche zueinander gerichtete Lagerflächen (8) aufweisen, zwischen denen eine hydrostatische und/oder hydrodynamische Schmierung erfolgt, wobei zumindest ein Lagerelement (3,5) von der Achse (2) oder einem Zapfen der Walze oder einem die Achse (2) umgebenden, achsparallelen und hohlzylindrischen Lagerring (4) gebildet wird.

Dabei soll die Schmierung dadurch verbessert werden, dass die Lagerfläche (8) zumindest eines Lagerelementes (3,5) wenigstens in einem Abschnitt Mikrotaschen aufweist.

## Beschreibung

Die Erfindung betrifft eine Walzenlagerung zwischen einem rotierenden und einem zweiten Lagerelement, welche zueinander gerichtete Lagerflächen aufweisen, zwischen denen eine hydrostatische und/oder hydrodynamische Schmierung erfolgt, wobei zumindest ein Lagerelement von der Achse oder einem Zapfen der Walze oder einem die Achse umgebenden, achsparallelen und hohlzylindrischen Lagerring gebildet wird.

Bei hydrostatisch und/oder hydrodynamisch geschmierten Lagern werden Notlaufeigenschaften, wenn also die Schmiermittelversorgung ausfällt, durch eine geeignete Materialwahl sichergestellt.

Beispielsweise wird dies über einen hohen Bleianteil bei den Kontaktflächen möglich, was diese jedoch wegen der Weichheit auch relativ anfällig für Beschädigungen durch kleine Fremdkörper in Form von Riefenbildung macht.

Bei hydrodynamischen Lagern wird ein nicht unerheblicher Anteil des Anfahrmomentes für die Überwindung der Feststoffreibung benötigt.

Die Aufgabe der Erfindung ist es daher die Schmierung zu verbessern und sicherer zugestalten.

Erfindungsgemäß wurde die Aufgabe dadurch gelöst, dass die Lagerfläche zumindest eines Lagerelementes wenigstens in einem Abschnitt Mikrotaschen aufweist.

Bei hydrostatischer Schmierung füllen sich die Mikrotaschen beim Anfahren mit dem Schmiermittel. Versagt die Schmiermittelversorgung, so bleiben die Mikrotaschen längere Zeit gefüllt und halten so einen Schmierfilm zwischen den Lagerflächen der Lagerelemente aufrecht.

Die Flüssigkeitsreibung bleibt dabei mindestens so lange erhalten, wie der rotierende Schmiermittelfilm besteht, da hierdurch immer wieder neues Schmiermittel in die Mikrotaschen gefördert wird. Durch diese Verbesserung der Notlaufeigenschaften bleibt genug Zeit für eine Abschaltung der Maschine.

Bei der hydrodynamischen Schmierung sind die Mikrotaschen bereits beim Anfahren mit dem Schmiermittel bedeckt. Dadurch werden der Schmiermittelfilm und der Tragdruck zwischen den entsprechenden Flächen schneller aufgebaut und der Zeitraum, in welchem Feststoffreibung vorliegt, minimiert. Dies reduziert die nötigen Anfahrmomente erheblich.

Es gibt auch Mischformen der hydrostatischen und hydrodynamischen Schmierung.

Konstruktive Vorteile ergeben sich, wenn wenigstens ein Lagerelement als vorzugsweise radial zur Walzenachse bewegliches Stützelement ausgebildet ist.

Im Interesse einer hohen Relativgeschwindigkeit zwischen den Lagerelementen ist es vorteilhaft, wenn das zweite Lagerelement fest steht. Es kann jedoch auch von Vorteil sein, wenn sich das zweite Lagerelement in Form eines Zwischenlagerringes geringfügig mitdreht.

Um eine ausreichende Schmierung zu gewährleisten, sollten die Mikrotaschen eine Tiefe zwischen 0,1 und 500 µm, vorzugsweise zwischen 5 und 15 µm haben.

Von Vorteil ist es im Interesse einer geringen Reibung außerdem, wenn die Abschnitte mit den Mikrotaschen eine offene Fläche von weniger als 60%, vorzugsweise zwischen 10 und 30% aufweisen.

Zur Begrenzung des Herstellungsaufwandes genügt es, wenn wenigstens der von der Lagerflächen des zweiten Lagerelementes überdeckte Abschnitt der Lagerfläche des rotierenden Lagerelementes Mikrotaschen besitzt.

Während des Betriebs werden die Lagerflächen bzw. Laufflächen des Stützelementes meist und/oder überwiegend hydrostatisch geschmiert. Hierzu ist es von Vorteil, wenn die Laufflächen zumindest eine zur Lagerfläche des gegenüberliegenden Lagerelementes hin offene und mit einem Druck- oder Schmiermittel, vorzugsweise Öl gefüllte Druckkammer begrenzen.

Das Schmiermittel wird während der Rotation in geringem, aber ausreichendem Umfang aus der Druckkammer in den Spalt zwischen den Lagerflächen der Lagerelemente geschleppt. Auf diese Weise kommt es auch zur Herausbildung des Schmiermittelfilms an dem rotierenden Lagerelement.

Um die Reibung zwischen den Lagerflächen infolge Verschleißes nicht zu vergrößern, ist es vorteilhaft, wenn die Lagerfläche des rotierenden Lagerelementes wenigstens in einem Abschnitt, vorzugsweise in den, von der Lagerfläche des zweiten Lagerelementes überdeckten Abschnitten mit einer verschleißfesten Schicht überzogen ist.

Zur Vereinfachung und der Ermöglichung eines umfassenden Einsatzes ist es von Vorteil, wenn die gesamte Lagerfläche des rotierenden Lagerelementes mit einer verschleißfesten Schicht überzogen ist.

Je nach Konstruktion der Walze und den Anforderungen kann es vorteilhaft sein, wenn die Achse feststehend ist und die sich darauf abstützenden Stützelemente eine konvexe und zum rotierenden Lagerelement gerichtete Lagerfläche aufweisen oder wenn die Achse rotiert und die Stützelemente eine konkave und zur Achse gerichtete Lagerfläche aufweisen.

Wegen der Größe und des Gewichts der Walzen und damit auch den hohen Anforderungen an die Walzenlagerung eignet sich der Einsatz dieser insbesondere bei Entwässerungs- oder Glättwalzen in Maschinen zur Herstellung und/oder Veredlung einer Papier-, Karton-, Tissue- oder einer anderen Faserstoffbahn.

Im Interesse eines möglichst geringen Herstellungsaufwandes sollten die Mikrotaschen mittel geeigneter Fertigungsverfahren, wie z.B. Umformverfahren, spanende Verfahren, chemische Verfahren, Sintern o.ä. in die Oberfläche eingebracht werden. Dabei sind jedoch Laser- oder Ätzverfahren bevorzugt.

Nachfolgend soll die Erfindung an zwei Ausführungsbeispielen näher erläutert werden. In der beigefügten Zeichnung zeigt:
- Figur 1:: einen schematischen Querschnitt durch eine Walzenlagerung mit feststehender Achse 2 und
- Figur 2:: eine Walze mit rotierender Achse 2.

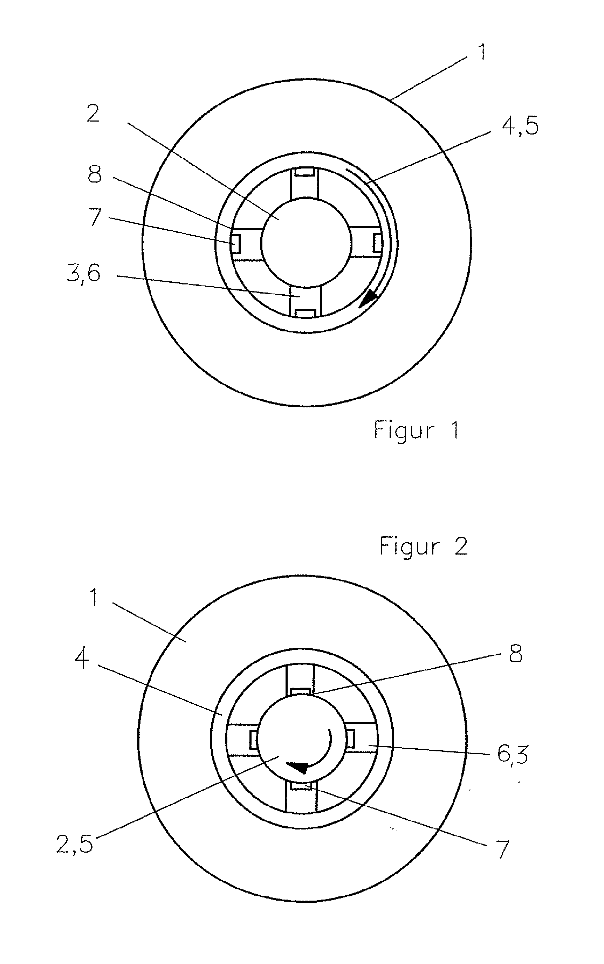

Bei der in Figur 1 gezeigten Presswalze wird das feststehende Lagerelement 3 von mehreren, sich auf der feststehenden Achse 2 abstützenden Stützelementen 6 gebildet. Auf dieser Achse 2 ist der Walzenmantel über die Walzenlagerung drehbar gelagert.

Das rotierende Lagerelement 5 wird von einem zylindrischen und achsparallel verlaufenden Lagerring 4 in Form einer Verlängerung des Walzenmantels 1 gebildet.

Dabei stützt sich die Lagerring 4 über vier Stützelemente 6 auf der Achse 2 ab.

Die Stützelemente 6 sind an der Achse 2 fixiert und gleichmäßig über den Umfang der Achse 2 verteilt.

Die mit der Lagerfläche 8 des Lagerrings 4 in Kontakt kommende Lagerfläche 8 der Stützelemente 6 hat eine konvexe Form und wie der Lagerring 4 eine verschleißfeste Beschichtung. Um den Lagerring 4 möglichst stabil halten zu können, ist der Querschnitt der Stützelemente 6 viereckig, vorzugsweise quadratisch.

Zur Realisierung einer zumindest überwiegend hydrostatischen Schmierung begrenzen die Laufflächen des Stützelementes 6 in Form von Stegen eine zum rotierenden Lagerelement 5 hin offene und mit einem Druck- oder Schmiermittel, vorzugsweise Öl gefüllte Druckkammer 7.

Das Schmiermittel gelangt gedrosselt über einen Kanal im Stützelement 6 in die Druckkammer 7.

Während der Rotation des Walzenmantels 1 und damit des Lagerrings 4 wird Schmiermittel aus den Druckkammern 7 in den Spalt zwischen den Lagerflächen 8 geschleppt, was gleichzeitig auch zur Herausbildung eines Schmiermittelfilms an dem Lagerring 4 führt.

Im Ergebnis kommt es zu einer hydrostatischen Schmierung der Lagerflächen 8 während des Betriebs.

Um bei einem Ausfall der Zufuhr von Schmiermittel den Schmierfilm zwischen den Lagerflächen 8 zu erhalten und so einen Kontakt zwischen den Lagerflächen 8 bis zum Stillstand des Walzenmantel 1 zu verhindern, werden die entsprechenden Oberflächen mit Mikrotaschen versehen.

Nach dem Anlauf der Maschine, d.h. der Rotation des Walzenmantels 1 kommt es durch die Bildung des Schmiermittelfilms an der Lagerfläche 8 des Lagerrings 4 auch zum Füllen der Mikrotaschen mit Schmiermittel. Um eine ausreichende Menge an Schmiermittel aufnehmen zu können, ohne die Funktion und Stabilität der Oberflächen zu beeinträchtigen, sollten die Mikrotaschen eine Tiefe zwischen 5 und 15 µm haben.

Sollte es nun zu einem Ausfall der Zufuhr von Schmiermittel kommen, so kann das Schmiermittel in den Mikrotaschen noch über eine begrenzte, aber im Allgemeinen ausreichende Zeit den Kontakt zwischen den Lagerflächen 8 verhindern.

Um den Aufwand zu begrenzen, sind nur die Lagerflächen 8 der Stützelemente 6 mit Mikrotaschen versehen. Bei Bedarf können diese jedoch auch in der Lagerfläche 8 des Lagerrings 4 realisiert werden.

Hergestellt werden die Mikrotaschen durch Ätzen der Oberfläche.

Im Gegensatz hierzu wird in Figur 2 das rotierende Lagerelement 5 von der Achse 2 der Presswalze gebildet. Die Enden der Achse 2 sind dabei jeweils in einem feststehenden Lagerelement 3 in Form eines zylindrischen Lagerrings 4 gelagert. Dieser Lagerring 4 ist mit der Stuhlung der Maschine verbunden.

Zur Fixierung der Achse 2 sind auch hier vier Stützelemente 6 zwischen dem Lagerring 4 und der Achse 2 gleichmäßig am Umfang verteilt angeordnet.

Jedoch sind hier die Stützelemente 6 an dem Lagerring 4 fixiert und befindet sich die Lagerfläche 8 des Stützelementes 6 mit den Mikrotaschen gegenüber der Achse 2.

Deshalb hat die Lagerfläche 8 eine konkave Form.

Auch hier bildet sich auf dem rotierenden Lagerelement 5, der Achse 2 ein Schmiermittelfilm nach dem Anlauf der Maschine, was zum Füllen der Mikrotaschen führt und die Schmierung nach einem Ausfall der Versorgung gewährleistet.

Besonders eignet sich die Walzenlagerung für Presswalzen zur Entwässerung oder Glättung einer Faserstoffbahn.

Die Walzenlagerung verbessert nicht nur die Notlaufeigenschaften bei einem Ausfall der Schmiermittelversorgung, sondern vergrößert auch den Gestaltungsspielraum hinsichtlich der Materialien der Lagerelemente 3,5.

Ohne die Druckkammern 7 kann ebenso eine hydrodynamische Schmierung realisiert werden. Dabei vermindert das Schmiermittel in den Mikrotaschen das notwendige Anfahrmoment.

## Patentansprüche

1. Walzenlagerung zwischen einem rotierenden und einem zweiten Lagerelement(3,5), welche zueinander gerichtete Lagerflächen (8) aufweisen, zwischen denen eine hydrostatische und/oder hydrodynamische Schmierung erfolgt, wobei zumindest ein Lagerelement (3,5) von der Achse (2) oder einem Zapfen der Walze oder einem die Achse (2) umgebenden, achsparallelen und hohlzylindrischen Lagerring (4) gebildet wird, **dadurch gekennzeichnet, dass**
die Lagerfläche (8) zumindest eines Lagerelementes (3,5) wenigstens in einem Abschnitt Mikrotaschen aufweist.

2. Walzenlagerung nach Anspruch 1, **dadurch gekennzeichnet, dass**
wenigstens ein Lagerelement (3) als vorzugsweise radial zur Walzenachse bewegliches Stützelement (6) ausgebildet ist.

3. Walzenlagerung nach Anspruch 1 oder 2, **dadurch gekennzeichnet, dass**
das zweite Lagerelement (3) fest steht.

4. Walzenlagerung nach einem der vorhergehenden Ansprüche, **dadurch gekennzeichnet, dass**
die Mikrotaschen eine Tiefe zwischen 0,1 und 500 µm, vorzugsweise zwischen 5 und 15 µm haben.

5. Walzenlagerung nach einem der vorhergehenden Ansprüche, **dadurch gekennzeichnet, dass**
die Abschnitte mit den Mikrotaschen eine offene Fläche von weniger als 60%, vorzugsweise zwischen 10 und 30% aufweisen.

6. Walzenlagerung nach einem der vorhergehenden Ansprüche, **dadurch gekennzeichnet, dass**
wenigstens der von der Lagerfläche (8) des zweiten Lagerelementes (3) überdeckte Abschnitt des rotierenden Lagerelementes (5) Mikrotaschen besitzt.

7. Walzenlagerung nach einem der vorhergehenden Ansprüche, **dadurch gekennzeichnet, dass**
die Lagerflächen (8) zumindest eine zum rotierenden Lagerelement (5) hin offene und mit einem Druck- oder Schmiermittel, vorzugsweise Öl gefüllte Druckkammer (7) begrenzen.

8. Walzenlagerung nach einem der vorhergehenden Ansprüche, **dadurch gekennzeichnet, dass**
das rotierende Lagerelement (5) wenigstens in einem Abschnitt, vorzugsweise in den von der Lagerfläche (8) des zweiten Lagerelementes (3) überdeckten Abschnitten mit einer verschleißfesten Schicht überzogen ist.

9. Walzenlagerung nach Anspruch 8, **dadurch gekennzeichnet, dass**
das gesamte rotierende Lagerelement (5) mit einer verschleißfesten Schicht überzogen ist.

10. Walzenlagerung nach einem der Ansprüche 2 bis 9, **dadurch gekennzeichnet, dass**
die Achse (2) feststehend ist und die sich darauf abstützenden Stützelemente (6) eine konvexe und zum rotierenden Lagerelement (5) gerichtete Lagerfläche (8) aufweisen.

11. Walzenlagerung nach einem der Ansprüche 2 bis 9, **dadurch gekennzeichnet, dass**
die Achse (2) rotiert und die Stützelemente (6) eine konkave und zur Achse (2) gerichtete Lagerfläche (8) aufweisen.

12. Anwendung der Walzenlagerung nach einem der vorhergehenden Ansprüche bei Entwässerungs- oder Glättwalzen in Maschinen zur Herstellung und/oder Veredlung einer Papier-, Karton-, Tissue- oder einer anderen Faserstoffbahn.

13. Verfahren zur Herstellung der Mikrotaschen nach einem der vorhergehenden Ansprüche, **dadurch gekennzeichnet, dass**
diese mittels Laser oder Ätzverfahren in die Oberfläche eingebracht werden.
